# EUROPEAN PATENT APPLICATION

(11) **EP 4 478 463 A1**
(43) Date of publication of application: **18.12.2024**
(21) Application number: 23461602.7
(22) Date of filing: 14.06.2023
(51) Int. Cl.: H01M 8/04014, H01M 8/04029, H01M 8/04089, H01M 8/04111, H01M 8/04082, H01M 8/0432, H01M 8/0438, H01M 8/04746, B64D 41/00

(54) **HYDROGEN FUEL CELL SYSTEM ARCHITECTURE**

(71) Applicant: Hamilton Sundstrand Corporation, Charlotte, NC 28217 (US)
(72) Inventor: Kruczek, Grzegorz, 51-317 Wroc aw (PL)
(74) Representative: Dehns

(57) **Abstract**

A fuel cell system comprising: a gas turbine (110) having a combustion chamber (114) and a turbine (116); a hydrogen fuel cell (102) configured to generate electrical energy from input air and input hydrogen; an air flow path for providing air from a source of fresh air as input air to the fuel cell (102) and to the combustion chamber; and a closed hydrogen loop for providing hydrogen from a liquid or compressed hydrogen source (104) to the fuel cell and to the combustion chamber (114); the system further comprising: a hydrogen recirculation loop (30) receiving hydrogen from the liquid or compressed hydrogen source (104) and hydrogen used by the fuel cell to provide cooled used hydrogen, the hydrogen recirculation loop further combing the cooled used hydrogen with hydrogen from the liquid or compressed hydrogen source to provide to the fuel cell as the input hydrogen.

## Description

### TECHNICAL FIELD

The subject-matter disclosed herein relates to hydrogen fuel systems, and in particular to hybrid fuel cell gas turbine systems.

### BACKGROUND

There is increasing pressure on the aerospace industry to switch the primary fuel for aircraft from hydrocarbons to more sustainable energy sources such as hydrogen. Hybrid fuel cell gas turbine systems, for example, include a gas turbine system and also use electric power generated by a fuel cell. Such systems comprise low-temperature fuel cells (e.g. proton exchange membrane fuel cells (PEMFCs)) that can increase fuel-to-electricity conversion efficiency and lower emissions of greenhouse gases. However, it is desirable to further increase efficiency and reduce emissions of these systems. The examples disclosed herein relate to such hydrogen fuel systems.

Hybrid fuel cell gas turbine systems use compressed gas/air to drive a turbine to drive an aircraft propeller and also use electric power that is generated by a hydrogen fuel cell. Improvements have been made possible in relation to the use of compact and efficient fuel cells by the ability to store sufficient hydrogen in a compressed and/or liquid form. The hydrogen required to generate electricity from the fuel cell is typically stored in a tank. This is made feasible by technologies that enable hydrogen to be cryogenically compressed for storage or to be stored in liquid form. The compression of hydrogen for storage requires the hydrogen to be very highly compressed (e.g. between 300 - 850 bar and less than 78K) or to be cryogenically cooled to liquid state at temperatures below 20K. Such low temperatures, however, are typically only needed to allow efficient storage of the hydrogen. The hydrogen then needs to be heated, in the system, for use by the fuel cell. For improved functioning of the hydrogen-engine, or improved functioning of a fuel cell, the hydrogen fuel needs to reach higher temperatures (> 0°C = 273K). At present, the use of liquid hydrogen provides the more promising solution for hydrogen-based medium range, larger aircraft but compressed hydrogen also has promise and further technological developments may arise in this field. In any case, as very low temperatures are required for hydrogen storage, and the hydrogen in the system operation needs to be warmer, there is a need to improve efficiency of such systems and, particularly, to improve or maximise the efficiency of the fuel cell.

### SUMMARY

According to the present disclosure, use is made of the chill in the stored hydrogen for thermal management of other parts of the system. The system according to the disclosure uses the chill with a recirculating hydrogen loop such that compressed or liquid hydrogen on board an aircraft can be used as an additional heat sink to effectively manage heat produced during system operation.

According to one aspect, there is provided a fuel cell system comprising: a gas turbine having a combustion chamber and a turbine; a hydrogen fuel cell configured to generate electrical energy from input air and input hydrogen; an air flow path for providing air from a source of fresh air as input air to the fuel cell and to the combustion chamber; and a closed hydrogen loop for providing hydrogen from a liquid or compressed hydrogen source to the fuel cell and to the combustion chamber; the system further comprising: a hydrogen recirculation loop receiving hydrogen from the liquid or compressed hydrogen source and hydrogen used by the fuel cell to provide cooled used hydrogen, the hydrogen recirculation loop further combing the cooled used hydrogen with hydrogen from the liquid or compressed hydrogen source to provide to the fuel cell as the input hydrogen.

Also provided is a hybrid fuel cell gas turbine system comprising a hydrogen source (104), a source of fresh air and a fuel cell system as defined above and an aircraft with such a hybrid fuel cell gas turbine system.

Examples of the hydrogen fuel system according to this disclosure will now be described with reference to the drawings. It should be noted that variations are possible within the scope of the claims.

### BRIEF DESCRIPTION OF THE DRAWINGS

Figure 1 shows a first example of a hydrogen fuel system architecture.
Figure 2 shows a second example of a hydrogen fuel system architecture.
Figure 3 shows a third example of a hydrogen fuel system architecture.

### DETAILED DESCRIPTION

There is increasing pressure on the aerospace industry to switch the primary fuel used for aircraft from hydrocarbons to more sustainable energy sources such as hydrogen. This, however, brings many challenges. The systems described herein aim to take advantage of the new technologies of cryogenic compressed hydrogen and liquid hydrogen storage. As mentioned above, in order to reach a manageable H₂ volume, it must either be highly compressed and cooled (between 300-850 bar and <78K) or cryogenically cooled to liquid state (~-253°C = ~20K). The use of liquid hydrogen (LH) is more promising in terms of weight and volume when compared to compressed hydrogen (CH) and represents the only way to enable hydrogen-based short and medium range and bigger type of aircrafts. In particular, the new systems described herein utilise the chill that is associated with cryogenic fluid.

The low storage temperature of liquid hydrogen fuel allows it to be used to cool other parts of the system.

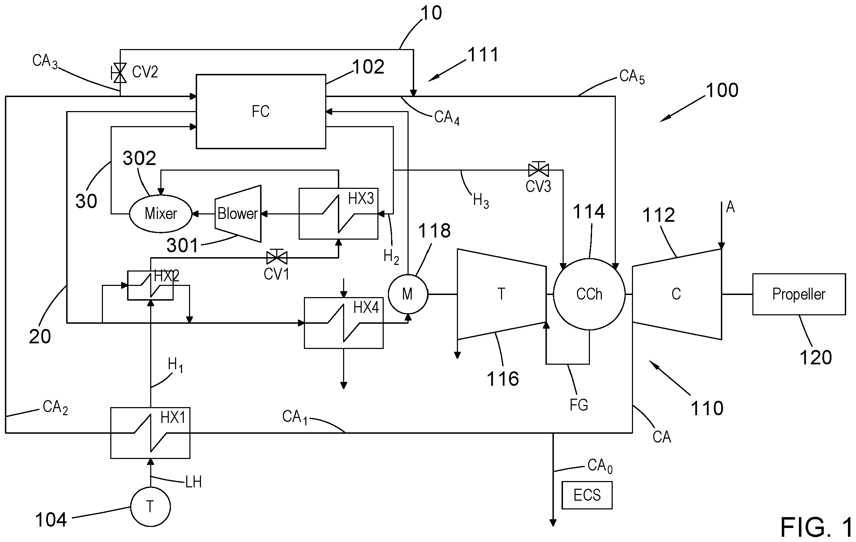

An architecture for a hydrogen fuel system 100 is shown in Figure 1. The hydrogen fuel system 100 shown in Figure 1 is used in a hybrid fuel cell gas turbine system comprising a fuel system, including a fuel cell 102, and a gas turbine engine 110. The gas turbine engine 110 comprises a combustion chamber 114 and a turbine 116. The hydrogen fuel system 100 is configured to provide the combustion chamber 114 with a stream of air and a stream of hydrogen (discussed further below). The hydrogen fuel system 100 is further configured to direct a stream of (hot) flue gas FG, generated from the combustion of the oxygen and hydrogen within the combustion chamber 114, from the combustion chamber 114 to the turbine 116. The hot flue gas FG is oxygen depleted.

In the example shown in Figure 1, the hydrogen fuel system 100 is arranged in an aircraft to provide electricity and propulsion to the aircraft.

The system consists of two main loops, namely hydrogen and coolant, and an air line, as will described in more detail below. For simplicity, auxiliary equipment such as pumps, solid separators, dehumidifiers, valves, splitters etc. are not shown/described in detail.

As shown in Figure 1, the hydrogen fuel system 100 comprises a tank 104 as a source of liquid hydrogen LH. As also shown in Figure 1, the hydrogen fuel system 100 comprises a compressor 112 configured to compress air A, such as ambient air or bleed air, to provide a stream of compressed air CA.

The compressed air CA may be split such that some of the compressed air, CAₒ,is provided to an environmental control system, ECS, of the aircraft, but this is optional. The remaining compressed air, CA₁, from the compressor (or all of the compressed air, CA, if some is not split off for the ECS) is provided to the power unit 111 in which the fuel cell 102 converts energy from the hydrogen to electrical power.

Valves may regulate the rate of flow of the first stream of compressed air CA₁ and rate of flow of the stream of liquid hydrogen LH to the first heat exchanger HX1. The rate of flow of the first stream of compressed air CA₁ is selected based on the requirements of the gas turbine engine 110 and the fuel cell. The rate of flow of the stream of liquid hydrogen LH is selected based on a combined hydrogen demand of the fuel cell 102 and the gas turbine engine 110.

The hydrogen fuel system 100 comprises at least a first heat exchanger HX1, a second heat exchanger HX2, a third heat exchanger HX3 and a fourth heat exchanger HX4.

The first heat exchanger HX1 is configured to receive the compressed air CA₁ (a first portion of the stream of compressed air CA from the compressor 112) and a stream of liquid hydrogen LH from the tank 104. The first heat exchanger HX1 is configured to transfer heat between the first stream of compressed air CA₁ and the stream of liquid hydrogen LH to reduce the temperature of the air CA_{1 ,} by heat transfer with the cold hydrogen, to comply with the operational requirements of the fuel cell 102 (e.g. to between 0 and 100 deg. C). The cooled air CA₂ is then provided to the fuel cell 102 where it reacts with hydrogen (described further below) to generate heat and electric energy.

Any excess air CA₃ that is not required for the operation of the fuel cell 102 can be directed to the output of the fuel cell by a bypass line 10 - i.e. to bypass the fuel cell 102. The bypass air CA₃ is diverted via a control valve CV2. This may be adjusted by a controller based on the air requirements of the fuel cell 102 and the mass of air CA₂ from the first heat exchanger HX1.

Remaining for now with the description of the air flow through the system, after the fuel cell 102, used air, CA_{4,} from the fuel cell reaction, is combined with the bypass air CA₃ and the combined air CAsis fed to the combustion chamber 114. Because this air includes used air CA₄ from the fuel cell, from which most of the oxygen has been removed in the fuel cell reaction (the used air only contains a maximum of 6% oxygen), the oxygen content of the air to the combustion chamber is diluted which, on combustion, results in lower combustion temperature and reduced nitrogen oxide emissions. Combustion energy from the gas turbine is used to drive the propeller 120.

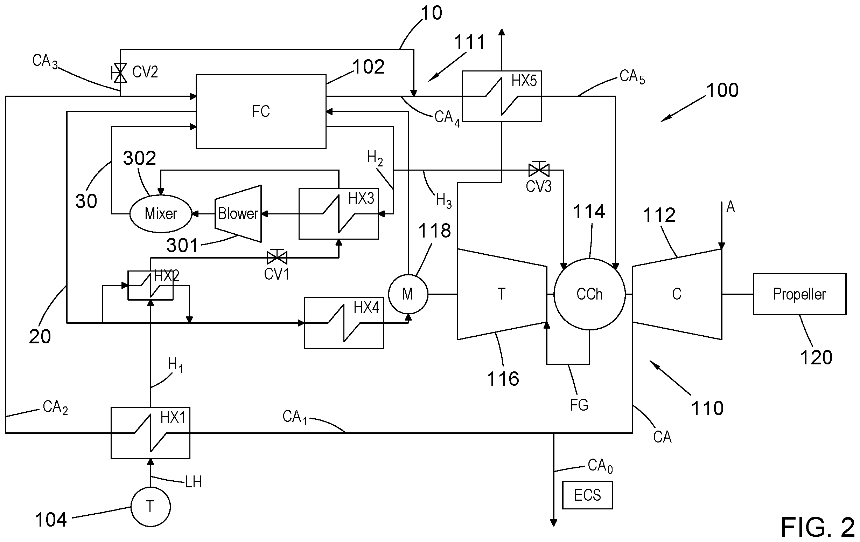

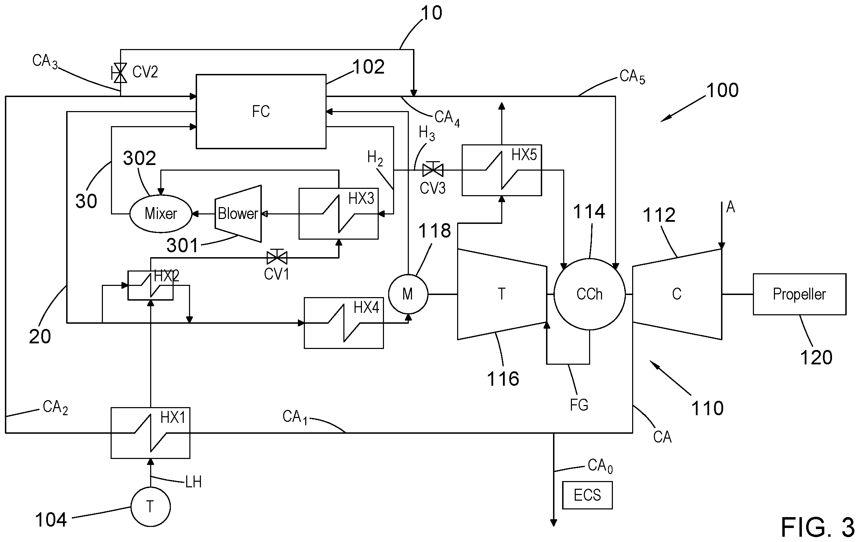

It is also possible to superheat the hydrogen (described further with reference to Fig. 2) and/or the air (described further with reference to Fig. 3) to recover some heat from the flue gas FG and increase the efficiency of the gas turbine. In some examples both the hydrogen and the air can be superheated at the same time.

The hydrogen loop starts from the cooled liquid/compressed hydrogen stored in the tank 104. Liquid hydrogen LH from the tank exchanges heat with the compressed air stream CA₁ to evaporate the hydrogen H_{1.} The evaporated hydrogen H₁ is used in the fuel cell 102 with the compressed, cooled air CA₂ to generate the electrical energy. In the embodiment shown, the evaporated hydrogen H₁ is first directed to the second heat exchanger HX2 where heat transfer occurs with a coolant 20 (discussed further below) to stabilise and control the hydrogen temperature. The hydrogen from the second heat exchanger HX2 then enters the third heat exchanger HX3 which is provided in a hydrogen recirculation loop 30 between the hydrogen input to the fuel cell 102 and the hydrogen output from the fuel cell. The heat transfer at the third heat exchanger HX3 is therefore between the stabilized evaporated hydrogen from the second heat exchanger HX2 and hydrogen leaving the fuel cell 102. The hydrogen leaving the fuel cell is hot due to the chemical reaction that takes place in the fuel cell (i.e. due to the generated heat) and the heat transfer therefore cools that hydrogen and also warms the fresh hydrogen being supplied to the fuel cell 102 from the second heat exchanger HX2, to a temperature suitable for operation of the fuel cell. In the embodiment shown, the hydrogen leaving the fuel cell 102 is split into one portion H₂ that is used in the third heat exchanger HX3 and another portion H₃ that is directed to the combustion chamber 114 e.g. via a control valve CV3.

Typically, the hydrogen exiting the fuel cell would be ejected to ambient. This can be wasteful and also, due to the hot hydrogen (typically 70 - 95 deg. C), dangerous. By providing the recirculation loop 30, the system of this disclosure makes use of this hot hydrogen. The recirculation loop 30 includes the third heat exchanger HX3 and, in series therewith, a blower 301 and a mixer 302. Because the hot hydrogen is cooled, in the third heat exchanger HX3, by fresh hydrogen from the second heat exchanger HX2, the density of the hydrogen is increased which means that smaller components, pipes, blower and less energy are required to compress the hydrogen to the required pressure. After the blower 301, the cooled hydrogen from the third heat exchanger HX3 is mixed, in the mixer 302, and is then directed to the fuel cell 102 as the input hydrogen. Thus hydrogen and the air CA₂ react in the fuel cell to generate the electricity.

The control system of the system includes a controller, the fresh hydrogen control valve CV1, a pressure sensor mounted before the mixer 302 on the recirculating and fresh hydrogen lines, a temperature sensor and a mass flow sensor. Using data from the pressure sensor, the controller will control operation of the blower 301 so that the pressure of the cooled hydrogen from the third heat exchanger HX3 is approximately the same as that of the fresh hydrogen with which it is mixed at the mixer 302. Data from the temperature sensor can be used to control the flow of coolant 20 through the second heat exchanger HX2 to adjust the temperature of the fresh hydrogen so that after the mixer 302, the temperature of the hydrogen is in an appropriate operating range (e.g. 0 - 95 deg. C). The mass flow sensor data can be used to adjust the control valve CV1 so that the mass flow entering the fuel cell 102 is greater (e.g. 1.25 times greater) than the mass flow required for operation of the hybrid gas turbine fuel cell system, to account for the hydrogen that exits the fuel cell.

The part H₃ of the used hydrogen that is directed to the combustion chamber 114 is combusted with diluted air CA₅ and then directed to the turbine 116 to extract power from the flue gas FG.

In some embodiments, a fifth heat exchanger HX5 can be provided to heat air (Fig. 2) and/or hydrogen (Fig. 3) so as to recover some of the heat from the flue gas to increase efficiency.

The opening of control valve CV3 for directing used hot hydrogen to the combustion chamber 114 is based on the requirements of the gas turbine whilst ensuring sufficient hydrogen remains in the recirculation loop 30 to feed the fuel cell 102. The controller preferably first determines the fuel cell requirement and then provides the remainder to the gas turbine. The controller may also take into account the combined operation of the fuel cell and the gas turbine to set the control valve CV3 to maximise efficiency.

Turning now to the coolant loop 20, this is configured to absorb heat from components of the gas turbine 110 and/or the fuel cell 102 into a working fluid within the coolant loop 20. For example, as shown in Figures 1-3, the coolant loop 20 is configured to convey a flow of working fluid to control the temperature of (e.g. cool) the fuel cell 102 and the electric motor 118 coupled to the gas turbine engine 110. The coolant loop provides a coolant flow path through the electric motor 118 which is powered by the fuel cell 102 and any other heat sources (e.g. oil, not shown) and then into the fuel cell 102 where the coolant temperature is increased (e.g. up to more than 100 deg. C) due to the heat in the fuel cell. Part of the hot coolant then enters the second heat exchanger HX2 where it is used to control the temperature of the fresh hydrogen. The mass flow of coolant entering the second heat exchanger HX2 is preferably controlled based on the temperature of the mixed used and fresh hydrogen from the mixer 302. By changing the coolant mass flow through the second heat exchanger HX2, the temperature of the fresh hydrogen and, then, the hydrogen from the mixer, can be influenced. As the energy stored in coolant is significantly higher than in hydrogen, the outlet temperature is close to the inlet temperature. This allows for temperature stabilisation of the hydrogen and prevents excessive icing in the heat exchanger HX2.

A fourth heat exchanger HX4 can be provided to reject waste heat to ambient while cooling the coolant to a desired temperature.

There is no limitation to the specific type of heat exchanger or control valves that can be used in the system of this disclosure. The heat exchangers may also, depending on the configuration, include components for moisture removal e.g. condensers, water separators, re-heaters, to protect against freezing.

By providing a closed loop for the hydrogen to and from the fuel cell, full use is made of the hydrogen in the system, without losses to ambient and so the efficiency and safety of the system is improved and the number and size/weight of component parts is significantly reduced. By combining a coolant loop with the hydrogen loop, the hot hydrogen from the fuel cell can be made more dense and so smaller, simpler parts can be used to convey the hydrogen to the fuel cell.

Further, as can be seen in the Figures, since only one compressor 112 is needed, this results in a lower aircraft weight. Since only one turbine 116 is needed, this also results in a lower aircraft weight. Thus, the examples described herein also provide a simple gas turbine design, that is cheaper, more reliable, has a higher energy efficiency and lower maintenance costs.

The systems described above may also comprise additional auxiliary equipment such as pumps, solid separator, dehumidifiers, valves, splitters etc, which are not shown in the Figures.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A fuel cell system comprising:
a gas turbine (110) having a combustion chamber (114) and a turbine (116);
a hydrogen fuel cell (102) configured to generate electrical energy from input air and input hydrogen;
an air flow path for providing air from a source of fresh air as input air to the fuel cell (102) and to the combustion chamber; and
a closed hydrogen loop for providing hydrogen from a liquid or compressed hydrogen source (104) to the fuel cell and to the combustion chamber (114); the system further comprising:
a hydrogen recirculation loop (30) receiving hydrogen from the liquid or compressed hydrogen source (104) and hydrogen used by the fuel cell to provide cooled used hydrogen, the hydrogen recirculation loop further combing the cooled used hydrogen with hydrogen from the liquid or compressed hydrogen source to provide to the fuel cell as the input hydrogen.

2. The fuel cell of claim 1, further comprising:
a first heat exchanger (HX1) provided in the air flow path and the closed hydrogen loop and configured to receive a first stream of compressed air from the source of fresh air and a stream of liquid or compressed hydrogen from the source of liquid or compressed hydrogen, wherein the first heat exchanger is configured to transfer heat between the first stream of compressed air and the stream of liquid hydrogen to yield a stream of cooled air and a stream of gaseous hydrogen, the stream of cooled air provided on the air flow path to the fuel cell as the input air; the stream of gaseous hydrogen provided to the fuel cell as input hydrogen via the hydrogen recirculation loop (30), the hydrogen recirculation loop comprising a further heat exchanger (HX3) receiving the gaseous hydrogen and hydrogen used by the fuel cell and exchanging heat therebetween to provide cooled used hydrogen, the hydrogen recirculation loop further comprising a mixer (118) for mixing the cooled used hydrogen with the gaseous hydrogen from the third heat exchanger to provide to the fuel cell as the input hydrogen.

3. A system as claimed in claim 2, further comprising a blower (301) in the hydrogen recirculation loop (30) upstream of the further heat exchanger (HX3).

4. A system as claimed in claim 1, 2 or 3, further comprising a coolant loop (20) arranged to absorb heat from components of the gas turbine (110) and/or the fuel cell (102).

5. A system as claimed claim 2 or claim 3 when dependent thereon, further comprising a second heat exchanger (HX2) located between the first heat exchanger (HX1) and the further heat exchanger (HX3) to receive the gaseous hydrogen from the first heat exchanger and provide stabilised evaporated hydrogen to the third heat exchanger.

6. A system as claimed in any preceding claim, further comprising a fourth heat exchanger (HX4) arranged to eject waste heat from the hydrogen loop to ambient.

7. A system as claimed in any preceding claim, further comprising a fifth heat exchanger (HX5) to superheat air and/or hydrogen exiting the fuel cell (102).

8. A system as claimed in any preceding claim, further comprising one or more valves arranged to regulate the flow of air and/or the flow of hydrogen.

9. A system as claimed in any preceding claim, wherein the first stream of compressed air is a portion of a stream of input air and another portion thereof is split off to be provided, in use, to an external system.

10. A system as claimed in claim 2 or any claim dependent thereon, further comprising a bypass line (10) via which some of the air from the first heat exchanger (HX1) bypasses the fuel cell (102).

11. A system as claimed in claim 10, wherein air from the bypass line is combined with used air exiting the fuel cell (102) and is provided to the combustion chamber (114).

12. A system as claimed in any preceding claim, further comprising a controller.

13. A hybrid fuel cell gas turbine system comprising a hydrogen source (104), a source of fresh air and a fuel cell system as claimed in any preceding claim.

14. A hybrid fuel system as claimed in claim 13, further comprising a propeller (120) driven by combustion energy from the gas turbine (110).

15. An aircraft having a hybrid fuel cell gas turbine system as claimed in claim 13 or 14.
